# EUROPEAN PATENT SPECIFICATION

(11) **EP 2 980 980 B1**
(45) Date of publication and mention of the grant of the patent: **26.05.2021**
(21) Application number: 14775118.4
(22) Date of filing: 10.03.2014
(51) Int. Cl.: H02M 7/5387, H02J 3/38, H02M 7/5395

(54) **INVERTER DEVICE**
UMRICHTERVORRICHTUNG
DISPOSITIF D'ONDULEUR

(30) Priority: 28.03.2013 JP 2013069266
(43) Date of publication of application: 03.02.2016
(73) Proprietor: Panasonic Intellectual Property Management Co., Ltd., Osaka-shi, Osaka 540-6207 (JP)
(72) Inventor: GOTO, Shusaku, Osaka-shi, Osaka 540-6207 (JP); IWAMATSU, Yusuke, Osaka-shi, Osaka 540-6207 (JP)
(74) Representative: Appelt, Christian W.
(86) International application number: PCT/JP2014/001318
(87) International publication number: WO 2014/156003

(56) References cited:
- EP-A2- 1 369 985
- WO-A1-2009/135284
- WO-A1-2011/105588
- JP-A- H09 149 636
- JP-A- 2004 135 408
- JP-A- 2009 089 541
- JP-A- 2009 089 541
- JP-A- 2011 015 493
- JP-A- 2011 229 215
- JP-A- 2012 048 985
- RAO A ET AL: "A modified single phase inverter topology with active common mode voltage cancellation", POWER ELECTRONICS SPECIALISTS CONFERENCE, 1999. PESC 99. 30TH ANNUAL I EEE CHARLESTON, SC, USA 27 JUNE-1 JULY 1999, PISCATAWAY, NJ, USA,IEEE, US, vol. 2, 27 June 1999 (1999-06-27), pages 850-854, XP010346761, DOI: 10.1109/PESC.1999.785610 ISBN: 978-0-7803-5421-0
- KLUMPNER C ET AL: "New steps towards a low-cost power electronic building block for matrix converters", INDUSTRY APPLICATIONS CONFERENCE, 2000. CONFERENCE RECORD OF THE 2000 IEEE 8-12 OCTOBER 2000, PISCATAWAY, NJ, USA,IEEE, vol. 3, 8 October 2000 (2000-10-08), pages 1964-1971, XP010521380, ISBN: 978-0-7803-6401-1
- KLUMPNER C ET AL: "TWO STAGE DIRECT POWER CONVERTERS: AN ALTERNATIVE TO THE MATRIX CONVERTER", IEE SEMINAR MATRIX CONVERTERS, IEE, LONDON, GB, 1 April 2003 (2003-04-01), pages 7/1-7/9, XP002373642,
- TATSUO MORITA ET AL: "650 V 3.1 mΩcm<sup>2</sup> GaN-based monolithic bidirectional switch using normally-off gate injection transistor", 2007 IEEE INTERNATIONAL ELECTRON DEVICES MEETING, 1 December 2007 (2007-12-01), pages 865-868, XP055066548, DOI: 10.1109/IEDM.2007.4419086 ISBN: 978-1-42-441507-6
- RIK W DE DONCKER ET AL: "Power electronic devices for renewable power systems", POWER SEMICONDUCTOR DEVICES&IC'S (ISPSD), 2010 22ND INTERNATIONAL SYMPOSIUM ON, IEEE, PISCATAWAY, NJ, USA, 6 June 2010 (2010-06-06), pages 19-25, XP031729210, ISBN: 978-1-4244-7718-0
- BRUNO BURGER ET AL: "Extreme high efficiency PV-power converters", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8 September 2009 (2009-09-08), pages 1-13, XP031541616, ISBN: 978-1-4244-4432-8
- EMILIO J ESTEBANEZ ET AL: "An overview of anti-islanding detection algorithms in photovoltaic systems in case of multiple current-controlled inverters", IECON 2009 - 35TH ANNUAL CONFERENCE OF IEEE INDUSTRIAL ELECTRONICS (IECON 2009) - 3-5 NOV. 2009 - PORTO, PORTUGAL, IEEE, PISCATAWAY, NJ, USA, 3 November 2009 (2009-11-03), pages 4555-4560, XP031629528, ISBN: 978-1-4244-4648-3
- JIN BEOM JEONG ET AL: "A Novel Method for Anti-Islanding using Reactive Power", TELECOMMUNICATIONS CONFERENCE, 2005. INTELEC '05. TWENTY-SEVENTH INTERNATIONAL, IEEE, PI, 1 September 2005 (2005-09-01), pages 101-106, XP031063264, ISBN: 978-3-8007-2905-0

## Description

### Technical Field

The present invention relates to an inverter device that switches direct-current power and generates alternating-current power.

### Background Art

Given the spread of solar photovoltaic, household fuel cells and so on in recent years, there is a demand for an inverter device that switches the direct-current power of these and generates alternating-current power.

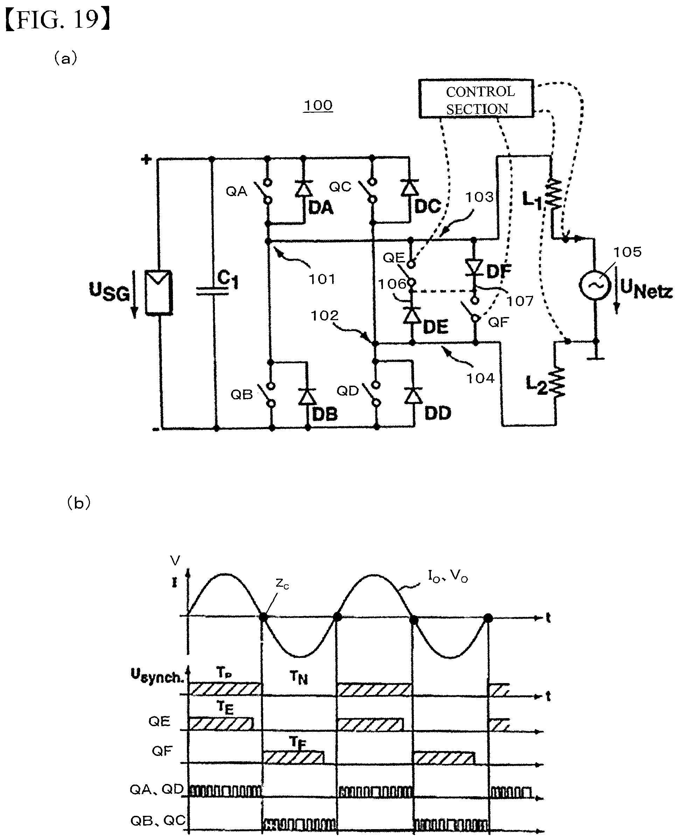

FIG. 19(a) shows a fundamental structure of an inverter device 100 that uses an output clamp system, such as one shown in patent literature 1. This inverter device 100 has an inverter section that is formed with a bridge circuit, in which a series circuit of switching elements QA and QB and a series circuit of switching elements QC and QD are connect in parallel. Connecting wires 103 and 104 are drawn out from the midpoint 101 of the switching elements QA and QB, which are connected in series, and from the midpoint 102 of the switching elements QC and QD, and the two connecting wires 103 and 104 are connected to a load 105 via reactors L1 and L2. Between the two connecting wires 103 and 104, a connecting path 106, which is comprised of a switch QE and a series diode DE, and a connecting path 107, which is comprised of a switch QF ad a series diode DF, are provided, and these two separate connecting paths 106 and 107 constitute a clamp section. The conducting directions of the two diodes DE and DF in the clamp section are opposite to each other between the two connecting paths 106 and 107.

Next, the driving method of the inverter device 100 will be described with reference to FIG. 19(b). First, in the period of one half of the cycle in which the output voltage is positive, the inverter section is applied PWM control, in which the switching elements QA and QD are in-phase, and pulse signals are supplied so that the switching element QE is always on. In this period, when the switching elements QA and QD are turned on, the input direct-current voltage is output to the load 105 via the switching elements QA and QD and the reactor L1, and the reactor current I_{L} increases. The clamp section, in which the switching element QE alone is turned on, becomes a reverse bias circuit of the diode DE, and therefore current does not flow.

Then, if, in this period, the switching elements QA and QD are turned off, reverse electromotive force is produced from the reactor L1, and the reactor current I_{L} circulates back to the diode DE that is connected to the switch QE and switch QE in series. Then, since the reactor input voltage (the terminal voltage of the switching element QE) is clamped nearly to 0V, the reactor voltage becomes a reverse bias, and the reactor current I_{L} drops. In this way, in the period of one half of the cycle in which the output voltage is positive, the output current is controlled based on the proportion of the on/off period in the switches QA and QD, and the waveform of the input current in the load 105 is approximated to a sinusoidal wave.

Next, at the zero-cross point Zc of the output voltage, the inverter device 100 switches the pair of the switching elements QA and QD and the pair of the switching elements QB and QC on/off alternately, and switches the switching element QE and the switching element QF of the clamp section on/off alternately. That is, in the drive during the period of one half of the cycle in which the output voltage is negative, as shown in FIG. 19(b), PWM control is applied to the switching elements QB and QC, and pulse signals are controlled so that, instead of the switch QE, the switch QF is always ON.

The inverter device 100 of this type can reduce the loss due to potential differences in PWM control signals, and therefore is used in the inverter section of power conditioners and so on as a device to realize high conversion rates, low noise and miniaturization.

### Citation List

### Patent Literature

Patent Literature 1: US Patent No. 7,046,534 RAO A ET AL: "A modified single phase inverter topology with active common mode voltage cancellation", Power Electronics Specialists Conference, 1999, PESC 99, 30th annual IEEE Charleston, SC, USA, volume 2, pages 850 to 854 addresses the problem of common mode EMI reduction in single phase PWM inverter by means of active cancellation and describes that two additional switching devices are added to the conventional the topology.

JP 2009 089541 A describes an inverter device with a power supply line short-circuiting circuit for short-circuiting power supply lines between the full-bridge inverter and a single-phase three-line power supply system. When a current of the full-bridge inverter drops during an off-period of a drive pulse signal for the full-bridge inverter, the power line short-circuiting circuit operates to short-circuit between the power supply lines.

EP 1 369 985 A2 describes that between two direct current (DC) connections in a parallel wiring structure there is a intermediate power store and a bridge circuit with two parallel branches, to each of which are wired rectifier diodes in parallel. Certain rectifier diodes link to each other in single connecting paths in an opposed conducting direction. Each of two alternating current (AC) connections links individually via a connection node to one of the parallel branches between two switch units by means of a connecting wire, in which each has inductive chokes.

WO 2009/135284 A1 describes a method and an apparatus for converting direct current into alternating current. The apparatus includes a converter circuit having first and second source nodes for receiving direct current from a source and first and second load nodes for connecting a load. The circuit includes first and second switches in series between the first and second source nodes with a common first intermediate node, and third and fourth switches in series between the first and second source nodes with a common second intermediate node. A first inductor is connected between the first intermediate node and the first load node, and a second inductor is connected between the second intermediate node and the second load node. The apparatus includes a controller for causing first, second, third, and fourth switching control signals to be asserted to cause the first, second, third, and fourth switches to selectively conduct current between the first and second source nodes and the first and second load nodes to produce an alternating current, and to cause a single shunt control signal to be asserted when the switching control signals are not asserted. The apparatus includes a bidirectional current shunt connected between the first and second intermediate nodes, the current shunt including a unitary switched current path for conducting current when the shunt control signal is asserted and the switching control signals are not asserted. The current shunt is configured to bock current flow between the first and second intermediate nodes when the shunt control signal is not asserted.

### Summary of Invention

However, with the above conventional inverter device 100, the on/off switching of the switching elements QE and QF in the clamp section and the on/off switching of the pair of the switching elements QA and QD and the pair of the switching elements QB and QC in the inverter section are carried out at the zero-cross point Zc of the output voltage. Consequently, when a phase shift is produced between the output voltage and the output current, current cannot be controlled, and, as a result of this, the problem arises that reactive power cannot be supplied.

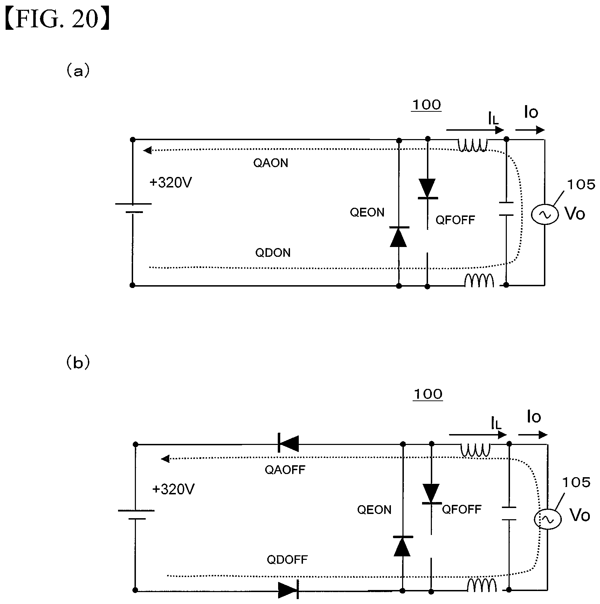

This will be described using FIG. 20. As shown with the solid-line and dotted-line arrows in FIG. 20(a), when there is a phase shift between the output voltage Vo and the output current Io, for example, in the period in which the output current Io is negative and the output voltage Vo is positive, at the point the switching elements QA and QD of the inverter section are turned on and the switching element QE of the clamp section is turned on, the leftward-pointing current drops. Also, even if the switching elements QA and QD of the inverter section are switched off based on PWM control signals during this period, the leftward-pointing current drops, as shown with the solid-line and dotted-line arrows in FIG. 20(b). That is, since the leftward-pointing current keeps dropping in this period, it is not possible to allow leftward-pointing current, that is, negative current, to flow, and as a result of this, the output current cannot be controlled.

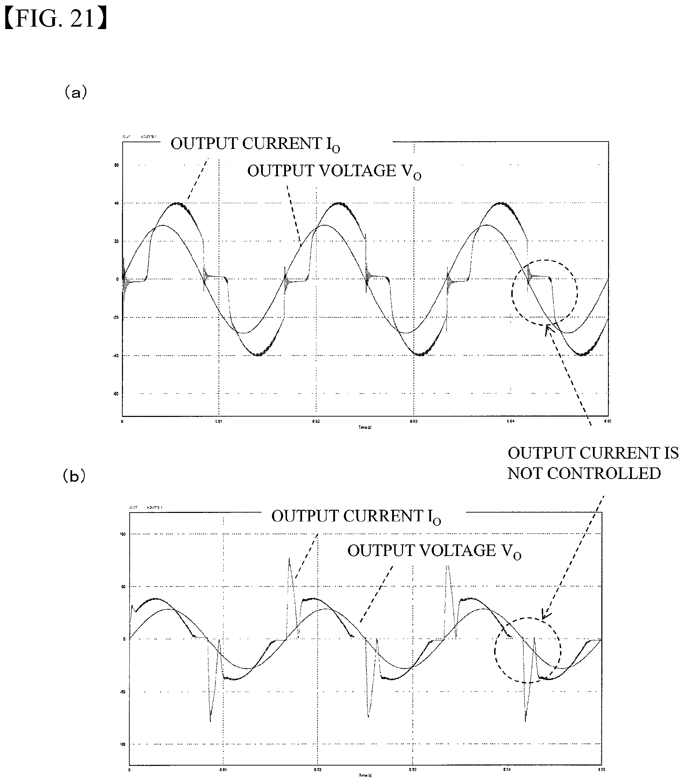

Now, the waveform of each of the output voltage Vo and the output current I_{O} when the above conventional inverter device 100 is used are shown in FIG. 21. FIG. 21(a) shows simulation results of the waveform of each of the output current Io and the output voltage Vo when the current phase lags behind the voltage phase by 30 degrees, and FIG. 21(b) shows simulation results of the waveform of each of the output current Io and the output voltage Vo when the current phase leads the voltage phase by 30 degrees. As obvious from these drawings, it is clear that the conventional inverter device 100 cannot control current well in the period in which the signs of the output voltage Vo and the output current Io are different.

Then, as a result of this, reactive power cannot be supplied from the inverter device and power cannot be efficiently supplied to the capacitive load (capacitor) and the inductive load (reactor), and, furthermore, with a grid-interconnection inverter, active reactive power for independent operation detection cannot be supplied.

The present invention has been made in view of the above conventional problems, and it is therefore an object of the present invention to provide an inverter device that can control the output current and supply reactive power effectively even when a phase shift is produced between the output current and the output voltage.

The invention is defined by independent claim 1. Preferred embodiments are described in the dependent claims. To achieve the above object, the present invention provides an inverter device which has:
an inverter section that is formed by parallel-connecting a series circuit of a first switching element where a first diode is connected in anti-parallel and a second switching element where a second diode is connected in anti-parallel, and a series circuit of a third switching element where a third diode is connected in anti-parallel and a fourth switching element where a fourth diode is connected in anti-parallel, and in which connecting wires are drawn out from a midpoint of the first switching element and the second switching element and a midpoint of the third switching element and the fourth switching element, and the connecting wires are connected to a load;
a clamp section provided between the two connecting wires, and formed with a series circuit, in which a fifth switching element where a fifth diode is connected in anti-parallel and a sixth switching element where a sixth diode is connected in anti-parallel are series-connected so that conducting directions of the fifth diode and the sixth diode become opposite to each other, and wherein the fifth switching element and the sixth switching element that form the clamp section are connected in series in such orientation that a collector is common, and connection of the first switching element and the fifth switching element and connection of the third switching element and the sixth switching element are arranged in such orientation that an emitter is common; and
a control section that is configured to supply pulse signals for on/off switching to each of the first switching element to the sixth switching element such that when there is a phase shift between an output current and an output voltage to be output to the load,
   (i) in a time period where the output current is negative and the output voltage is positive, the control section is configured to switch on and off the first switching element and the fourth switching element based on PWM signals, switch off the second switching element and the third switching element, and switch off the fifth switching element in the ON period of the first switching element and the fourth switching element, and switch off the sixth switching element in the ON period of the first switching element and the fourth switching element, and switch on the sixth switching element in the OFF period of the first switching element and the fourth switching element, and
   (ii) in a time period where the output current is positive and the output voltage is negative, the control section is configured to switch on and off the second switching element and the third switching element based on PWM signals and switch off the first switching element and the fourth switching element, and switch off the fifth switching element in the ON period of the second switching element and the third switching element, and switch on the fifth switching element in the OFF period of the second switching element and the third switching element, switch off the sixth switching element in the ON period of the second switching element and the third switching element,
      wherein
   (iii) in a time period where the output current is positive and the output voltage is positive, the control section is configured to switch on and off the first switching element and the fourth switching element based on PWM signals, switch off the second switching element and the third switching element, and constantly switch on the fifth switching element and constantly switch off the sixth switching element, and
   (iv) in a time period where the output current is negative and the output voltage is negative, the control section is configured to switch on and off the second switching element and the third switching element based on PWM signals and switch off the first switching element and the fourth switching element, and constantly switch off the fifth switching element and constantly switch on the sixth switching element.

In this inverter device, preferably, MOSFETs or IGBTs are used as the fifth switching element and the sixth switching element to form the clamp section.

In this inverter device, preferably, the inverter device further has an over-current detection section that detects over-current that flows in the clamp section, and the control section supplies the pulse signals so that, when current that is detected in the over-current detection section exceeds an allowable value, the fifth switching element and the sixth switching element of the clamp section are both turned off forcibly.

Furthermore, to achieve the above object, the present invention provides a grid interconnection inverter device, which has an independent operation detection function for detecting whether or not a distributed power supply is separated from a system power supply and operating independently, and this grid interconnection inverter device has the inverter device according to one of claims 1 to claim 5, and an independent operation detection section that, using the inverter device, supplies reactive power with a phase shift with respect to voltage of the system power supply, measures a system frequency, and detects whether the distributed power supply is operating independently based on changes of the system frequency.

With the inverter device according to the present invention, a clamp section, in which two switching elements where diodes are connected in anti-parallel are connected in series between two connecting wires that are drawn out from an inverter section so that the conducting directions of the diodes become opposite. The control section of the inverter device controls predetermined switching elements of the inverter section and the clamp section to switch on/off at the zero-cross point of the output voltage or the output power. As a result of this, the inverter device can control the output current and supply reactive power effectively even when a phase shift is produced between the output current and the output voltage.

### Brief Description of Drawings

FIG. 1 is a diagram to show a structure of an inverter device according to embodiment 1 of the present invention;
FIG. 2 is a time chart to show the waveforms of drive signals in the above inverter device;
FIG. 3(a) is a diagram to show switching elements that are turned on or off, and the flow of current, at time t2 in the time chart shown in FIG. 2, and FIG. 3(b) is a diagram for explaining the flow of current in the above inverter device;
FIG. 4(a) is a diagram to show switching elements that are turned on or off, and the flow of current, at time t3 in the time chart shown in FIG. 2, and FIG. 4(b) is a diagram for explaining the flow of current in the above inverter device;
FIG. 5 is a time chart to show the waveforms of drive signals in the above inverter device in another period;
FIG. 6 is a diagram to show switching elements that are turned on or off, and the flow of current, at time t6 in the time chart shown in FIG. 5;
FIG. 7 is a diagram to show switching elements that are turned on or off, and the flow of current, at time t7 in the time chart shown in FIG. 5;
FIG. 8 is a time chart to show the waveforms of drive signals in the above inverter device in another period;
FIG. 9(a) is a diagram to show switching elements that are turned on or off, and the flow of current, at time t9 in the time chart shown in FIG. 8, and FIG. 9(b) is a diagram for explaining the flow of current in the above inverter device;
FIG. 10(a) is a diagram to show switching elements that are turned on or off, and the flow of current, at time t10 in the time chart shown in FIG. 8, and FIG. 10(b) is a diagram for explaining the flow of current in the above inverter device;
FIGs. 11(a) and (b) are diagrams to show simulation results of the waveform of each of output current I_{O} and output voltage Vo when using the above inverter device;
FIG. 12(a) is a time chart to show the waveforms of drive signals in the above inverter device, and FIG. 12(b) is a diagram to show the flow of circulating current in the clamp section in period Δt3 shown in this diagram;
FIG. 13(a) is a time chart to show the waveforms of drive signals in an inverter device according to variation 1 of above embodiment 1, and FIG. 13(b) is a diagram to show the flow of circulating current in the clamp section in period Δt4 shown in this diagram;
FIG. 14(a) is a time chart to show the waveforms of drive signals and the switching loss in the inverter device according to above embodiment 1, and FIG. 14(b) is a diagram to show a circuit structure of the clamp section provided in this inverter device;
FIG. 15(a) is a time chart to show the waveforms of drive signals and the switching loss in an inverter device according to variation 2 of above embodiment 1, and FIG. 15(b) is a diagram to show a circuit structure of the clamp section provided in this inverter device;
FIG. 16 is a diagram to show an example module structure (161, 164) of a clamp section in an inverter device according to variation 3 of above embodiment 1 as well as other examples for clamp sections not falling into the scope of the claims (162, 163, 165, 166-169);
FIG. 17(a) is a diagram to show a circuit structure of an inverter device according to variation 4 of above embodiment 1, and FIG. 17(b) is a diagram to show the circuit symbols of the switching elements used in this inverter device;
FIG. 18 is a diagram to show a circuit structure of a clamp section in an inverter device according to variation 5 of above embodiment 1;
FIG. 19(a) is a diagram to show a structure of a conventional inverter device, and FIG. 19(b) is a time chart to show the waveforms of drive signals in this inverter device;
FIGs. 20(a) and 20(b) are diagrams for explaining the flow of current in the conventional inverter device; and
FIGs. 21(a) and 21(b) are diagrams to show simulation results of the waveform of each of output current I_{O} and output voltage Vo when using the conventional inverter device.

### Description of Embodiments

### (Embodiment 1)

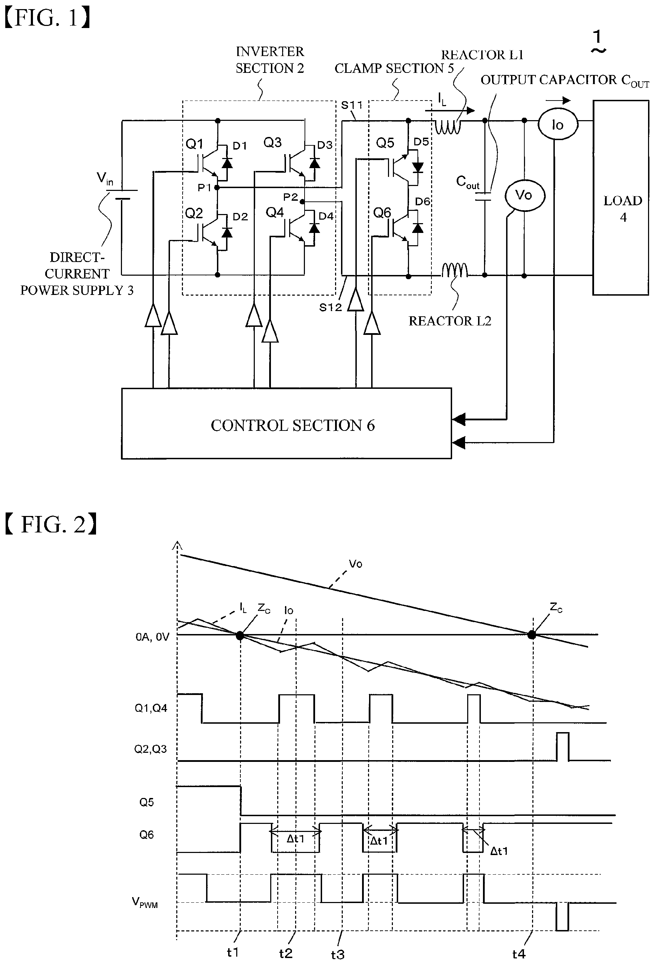

An inverter device according to embodiment 1 of the present invention will be described with reference to FIG. 1. The inverter device 1 has the function of converting direct-current voltage to alternating-current voltage, and assumes the structure shown in FIG. 1. The inverter section 2 has a series circuit of a first switching element Q1 where a first diode D1 is connected in anti-parallel and a second switching element Q2 where a second diode D2 is connected in anti-parallel. Also, the inverter section 2 has a series circuit of a third switching element Q3 where a third diode D3 is connected in anti-parallel and a fourth switching element Q4 where a fourth diode D4 is connected in anti-parallel. The inverter section 2 is formed with a bridge circuit in which these two series circuits are connected in parallel. For the switching elements Q1 to Q4, for example, IGBTs (Insulated Gate Bipolar Transistors) are used as power semiconductor devices.

From the midpoint P1 of the first switching element Q1 and the second switching element Q2 that are connected in series and from the midpoint P2 of the third switching element Q3 and the fourth switching element Q4 that are connected in series, connecting wires S11 and S12 are drawn out. Also, the connecting point of the first switching element Q1 and the third switching element Q3 and the connecting point of the second switching element Q2 and the fourth switching element Q4 are each an direct-current power input/output terminal (connecting point with a direct-current power supply 3 (Vin)). Furthermore, the connecting point of the first switching element Q1 and the second switching element Q2 and the connecting point of the third switching element Q3 and the fourth switching element Q4 are alternating-current power output terminals (input points to a load 4).

Between the connecting wires S11 and S12, a clamp section 5 is provided. The clamp section 5 is a series circuit, in which a fifth switching element Q5 where a fifth diode D5 is connected in anti-parallel and a sixth switching element Q6 where a sixth diode D6 is connected in anti-parallel are connected in series so that the conducting directions of the fifth diode D5 and the sixth diode D6 become opposite. In this way, unlike the inverter device 100 of a conventional example, the inverter device 1 forms the clamp section 5 with one connecting path.

The load 4 is connected to the connecting wires S11 and S12 via reactors L1 and L2. Assuming that the current that flows in the reactor L1 is I_{L}, the reactors L1 and L2 are provided so as reduce current changes. An output capacitor Cₒᵤₜ is added to the circuit to smoothen the voltage.

The control section 6 generates pulses based on, for example, a triangular wave-sinusoidal wave system, and switches the on/off state of the switching elements Q1 to Q6 of the inverter section 2 and the clamp section 5 by PWM control (switching). By this means, the control section 6 adjusts current and voltage, and applies current and voltage that are approximated to alternating-current waveforms to the load 4. Note that the PWM control in the control section 6 may be implemented by means of software control, or may be implemented on an analog circuit that uses a comparator and so on.

### (Driving method: period of I_{O}<0 and V_{O}>0)

Next, the driving method of the inverter device 1 will be described with reference to FIG. 2. First, the driving method in the event when, as shown in FIG. 2, there is a phase shift between output current I_{O} and output voltage Vo, and the output current I_{O} is negative and the output voltage V_{O} is positive, will be described.

The control section 6 detects the zero-cross point Z_{C} (time t1) of the output current I_{O}, and switches the switching elements Q5 and Q6 of the clamp section 5 on/off. At this time, the pair of the switching elements Q1 and Q4 and the pair of the switching elements Q2 and Q3 in the inverter section 2 are not switched on/off. Following this, in the period until the output voltage V_{O} reaches zero-cross Zc (until time t4), the operation to switch the switching elements Q1 and Q4 of the inverter section 2 on/off based on PWM signals from the control section 6 is repeated.

Also, the control section 6 switches off the switching element Q6 in the ON period of the switching elements Q1 and Q4 (for example, time t2). This is because, if the switching elements Q1 and Q4 and the switching element Q6 are turned on at the same time during the period in which the output current I_{O}<0 and the output voltage V_{O}>0, a path where penetrating current flows on the input voltage side, that is, a short circuit path of Vᵢₙ→Q1→Q5→Q6→Q4→Vᵢₙ, is formed. Consequently, it is necessary to avoid the formation of this short circuit path. Accordingly, to prevent the switching elements Q1 and Q4 and the switching element Q6 from being turned on at the same time during the period in which the output voltage Vo and the output current I_{O} to be output to the load 4 have mutually different signs, the control section 6 provides dead time Δt1 in which the switching element Q6 is turned off during the ON period.

Following this, at the zero-cross point Zc (time t4) of the output voltage Vo, the control section 6 switches the pair of the switching elements Q2 and Q3 on, instead of the pair of the switching elements Q 1 and Q4 of the inverter section 2, and executes PWM control. At this time, the output current I_{O} and the output voltage Vo have the same sign, so that it is not necessary to provide a dead time (off period) in the switching element Q6, and it is possible to always turn on the switching element Q6.

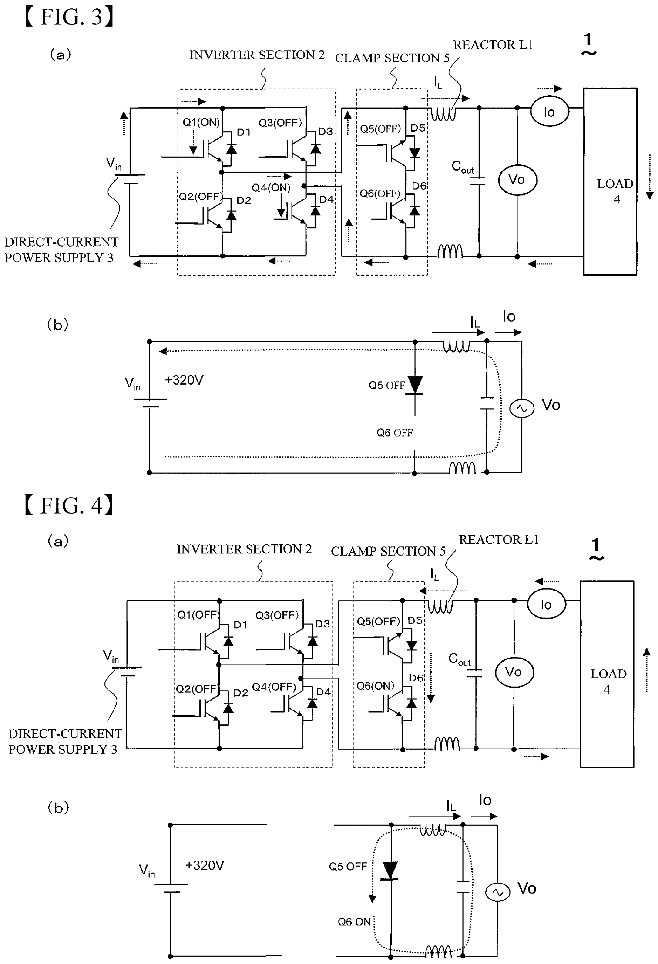

FIG. 3(a) shows the on/off state of the switching elements Q1 to Q6 and the flow of current at time t2 in the time chart shown in FIG. 2. At time t2, V_{PWM} is on a high level, so that the switching elements Q1 and Q4 conduct. Also, since the switching element Q1 and the switching element Q6 cannot be turned on at the same time, the switching element Q6 is turned off, and the clamp section 5 becomes non-conductive. Meanwhile, the switching elements Q2 and Q3 are in the off state, and are non-conductive due to the diodes D2 and D3. That is, in the load 4, current flows in the direction of the arrows shown in FIG. 3(a) and the rightward-pointing I_{L} current rises slowly, so that electromagnetic energy is accumulated in the reactor L1 during this period. Also, as shown with the solid-line and dotted-line arrows of FIG. 3(b), at this time t1, the leftward-pointing reactor current I_{L} drops.

FIG. 4(a) shows the on/off state of the switching elements Q1 to Q6 and the flow of current at time t3 in the time chart shown in FIG. 2. At time t3, V_{PWM} is on a zero-level, so that the switching elements Q1 and Q4 are not conductive. Also, the switching element Q6 is turned on, and the clamp section becomes an equivalent circuit of a downward-pointing diode. Meanwhile, the switching elements Q2 and Q3 are non-conductive. That is, since current flows in the load 4 in the direction of the dotted-line arrow as shown in FIG. 4(b), the rightward-pointing reactor current I_{L} drops slowly, and the leftward-pointing reactor current I_{L} increases. That is, with the inverter device 1 according to embodiment 1, as shown in FIG. 3(b) and FIG. 4(b), the increase and decrease of leftward-pointing current (negative output current) can be controlled.

### (Driving method: period of I_{O}>0 and V_{O}<0)

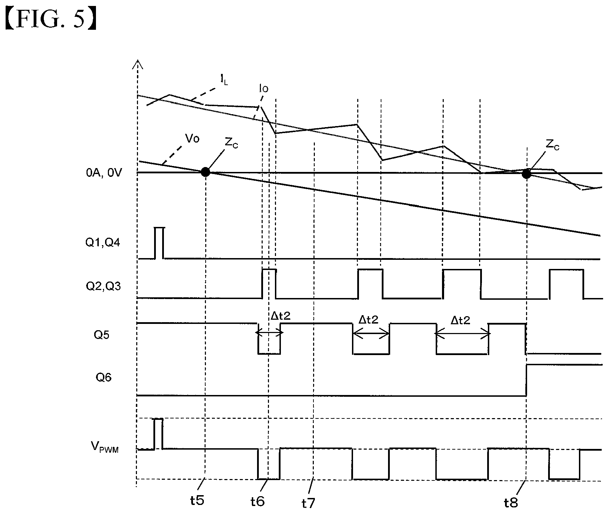

Next, the driving method of the inverter device 1 in another period will be described with reference to FIG. 5. Here, the driving method in the event when, as shown in FIG. 5(a), there is a phase shift between output current I_{O} and output voltage V_{O}, and the output current Io is positive and the output voltage V_{O} is negative, will be described.

The control section 6 detects the zero-cross point Z_{C} (time t5) of the output voltage Vo, and, switching to the pair of the switching elements Q1 and Q4 of the inverter section 2, applies PWM control to the pair of the switching elements Q2 and Q3. At this time, the switching element Q5 of the clamp section 5 stays turned on, and the switching element Q6 stays turned off. Following this, in the period until the output current Io reaches zero-cross Z_{C} (time t8), the switching elements Q2 and Q3 repeat being switched on/off based on PWM signals from the control section 6.

Also, the control section 6 applies control so that the switching element Q5 is turned off during the ON period of the switching elements Q2 and Q3 (for example, time t6). This is because, if the switching elements Q2 and Q3 and the switching element Q5 are turned on at the same time during the period in which the output current I_{O}>0 and the output voltage V_{O}<0, a path where penetrating current flows on the input voltage side, that is, a short circuit path of Vᵢₙ→Q3→Q6→Q5→Q2→Vᵢₙ, is formed. Consequent, it is necessary to avoid the formation of this short circuit path. Accordingly, to prevent the switching elements Q2 and Q3 and the switching element Q5 from being turned on at the same time during the period in which the output voltage V_{O} and the output current Io to be output to the load 4 have mutually different signs, the control section 6 provides dead time Δt2 in which the switching element Q5 is turned off during the ON period.

Following this, at the zero-cross point Z_{C} (time t8) of the output current I_{O}, the control section 6 switches the switching element Q6 on, instead of the switching element Q5 of the clamp section 5, and executes PWM control. At this time, the output current Io and the output voltage Vo have the same sign, so that it is not necessary to provide a dead time (off period) in the switching element Q6, and it is possible to always turn on the switching element Q6.

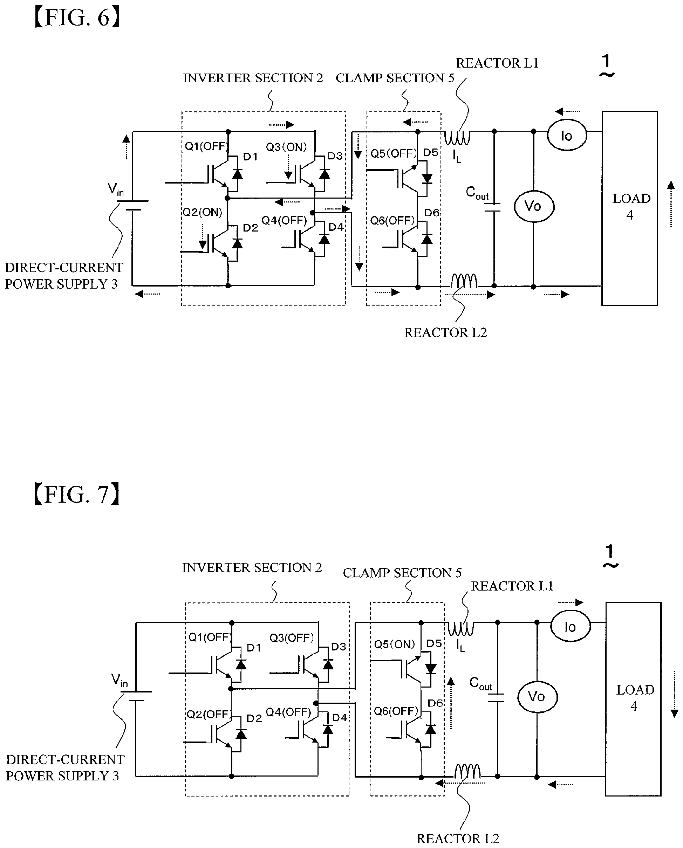

FIG. 6 shows the on/off state of the switching elements Q1 to Q6 and the flow of current at time t6 in the time chart shown in FIG. 5. At time t6, V_{PWM} is on a low level, so that the switching elements Q2 and Q3 conduct. Also, since the switching elements Q2 and Q3 and the switching element Q5 cannot be turned on at the same time, so that the switching element Q5 is turned off, and the clamp section 5 becomes non-conductive. Meanwhile, the switching elements Q1 and Q4 are in the off-state and are non-conductive due to the diodes D1 and D4.

FIG. 7 shows the on/off state of the switching elements Q1 to Q6 and the flow of current at time t7 in the time chart shown in FIG. 5. At time t7, V_{PWM} is on a zero-level, so that the switching elements Q2 and Q3 become non-conductive. Also, the switching element Q5 is turned on, and the clamp section becomes an equivalent circuit of an upward-pointing diode. Meanwhile, the switching elements Q1 and Q4 are non-conductive. That is, in the load 4, current flows in the direction of the arrows in FIG. 7. That is, in this period, the increase and decrease of rightward-pointing current (positive output current) is successfully controlled in the inverter device 1.

### (Driving method: period of I_{O}>0 and V_{O}>0)

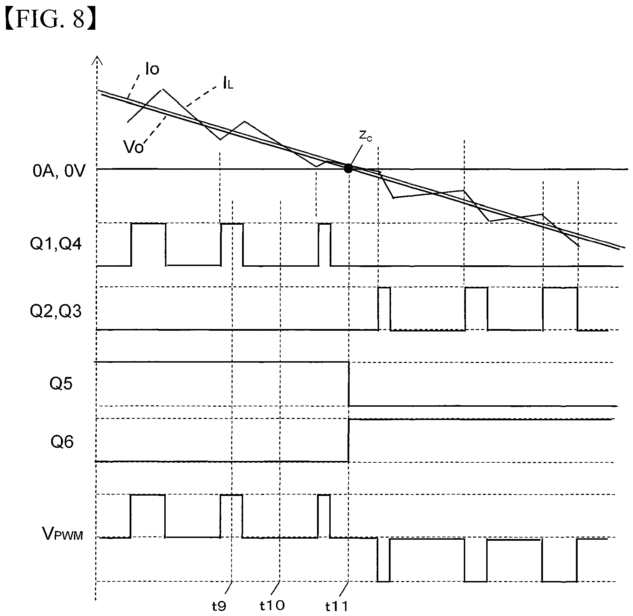

Next, the driving method of the inverter device 1 in another period will be described with reference to FIG. 8. Here, the method in the event when, as shown in FIG. 8, there is no phase shift between output current I_{O} and output voltage Vo, and when the output current I_{O} is positive and the output voltage Vo is positive, will be described. Note that, in the period where the output voltage Vo and the output current I_{O} have the same sign, the inverter device 1 according to embodiment 1 and the conventional inverter device 100 operate in the same way.

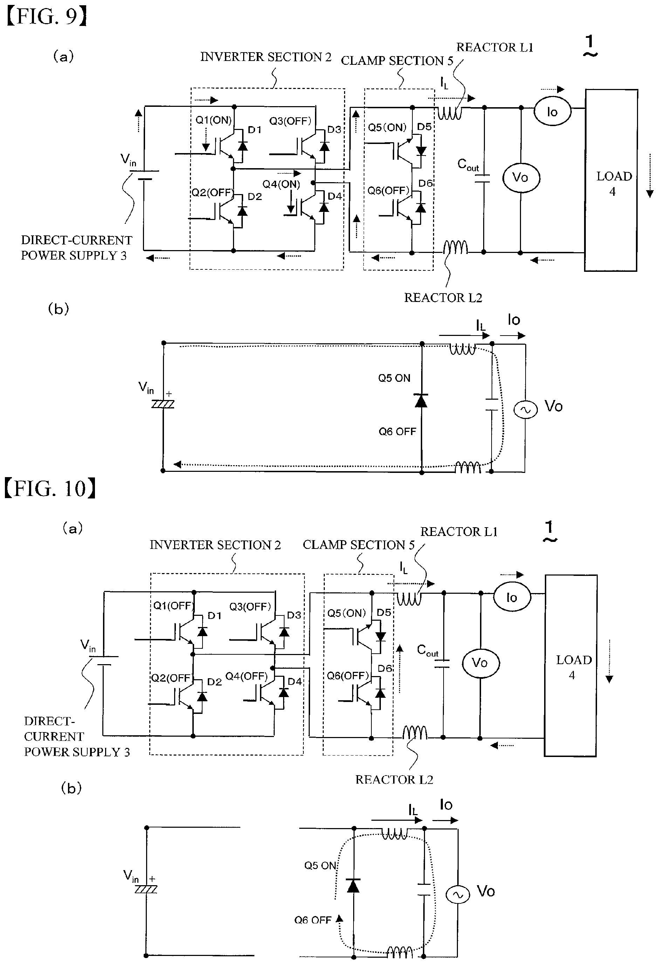

In this case, when the switching elements Q1 and Q4 are turned on (for example, time t9), as shown with the dotted-line arrows of FIG. 9, the output current I_{O} increases via the reactor L1 from the direct-current power supply 3, and the rightward-pointing current increases. The clamp section 5, in which the switching element Q5 alone is in the ON state, becomes a reverse bias circuit of the diode D6, so that current does not flow in the clamp section 5.

Next, when the control section 6 turns off the switching elements Q 1 and Q4 (for example, time t10), as shown with the dotted-line arrows of FIG. 10, the circulating current of reactors automatically flows through the diode D6 of the switching element Q6. At this time, the terminal voltage of the switching element Q6 becomes nearly 0V, the reactor voltage becomes a reverse bias, and the output current I_{O} drops. Accordingly, the increase and decrease of rightward-pointing current (positive output current) is successfully controlled in the inverter device 1. Then, at the zero-cross point Zc of the output voltage Vo (time t11), the control section 6 pairs the pair of the switching elements Q1 and Q4 and the pair of the switching elements Q2 and Q3, which are diagonal switches of the inverter section 2, and switches the on/off operation alternately. Also, at the same time, the on/off operation of the switching element Q5 and Q6 is switched as well.

As described above, in the inverter device 1 according to embodiment 1 herein, (1) the switching element Q5 and the switching element Q6 of the clamp section 5 are switched on/off at the zero-cross point Zc of the output current I_{O}. Also, (2) the pair of the switching elements Q1 and Q4 and the pair of the switching elements Q2 and Q3 of the inverter section 2 are switched on/off at the zero-cross point Z_{C} of the output voltage V_{O}. Furthermore, (3) in the period where the output current Io and the output voltage Vo have different signs, a dead time Δt is provided so that the ON period of the switching elements Q 1 to Q4 of the inverter section 2 and the ON period of the switching elements Q5 and Q6 of the clamp section 5 do not overlap.

Note that, in the above conventional inverter device 100, unlike the control of above (1) and (2) in the inverter device 1 according to embodiment 1 herein, the on/off switching of the switching elements of the clamp section and the inverter section is all carried out only at the zero-cross point Z_{C} of the output voltage Vo. Also, unlike the control of above (3) in the inverter device 1 according to embodiment 1 herein, no dead time is provided in the ON period of the switching elements of the clamp section.

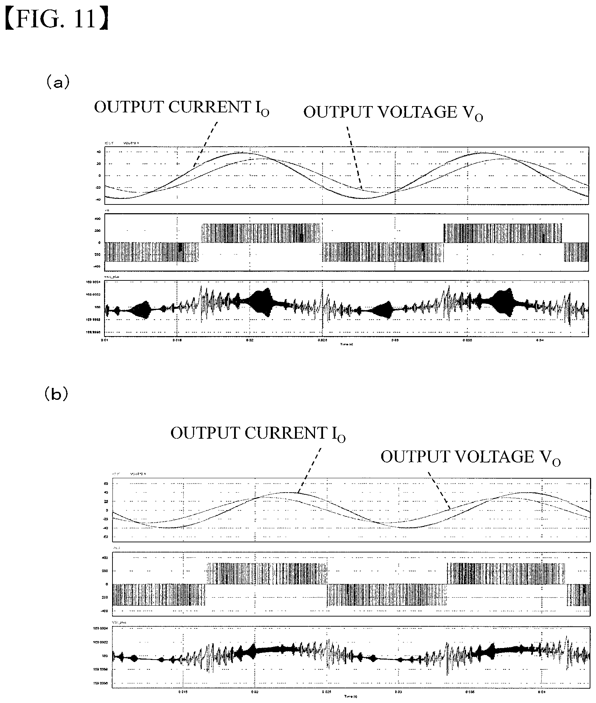

FIG. 11 shows examples of the waveforms of the output voltage Vo and the output current I_{O} from the inverter device 1. FIG. 11(a) shows the waveforms of the output voltage Vo and the output current I_{O} when the current phase leads the voltage phase by 30 degrees, and FIG. 11(b) shows the waveforms of the output voltage Vo and the output current I_{O} when the current phase lags behind the voltage phase by 30 degrees. As obvious from these drawings, while the output voltage Vo and the output current I_{O} maintain the phase shift, the output current I_{O} is controlled with little distortion, and, as a result, the output of reactive power can be controlled.

As described above, the inverter device 1 according to embodiment 1 herein can control the output current in an output clamp system featuring the clamp section 5, and supply reactive power effectively. As a result, even when a phase shift is produced between the alternating output current I_{O} and the alternating output voltage Vo, it is still possible to output reactive power, which is required to drive the capacitive load (capacitor) and the inductive load (reactor). Also, by providing a dead time Δt such as ones described above in the ON period of the switching elements Q5 and Q6 in the clamp section 5, it is possible to improve the efficiency of, and reduce the noise of, the inverter device 1. Furthermore, reactive power providing a phase shift between the output current I_{O} and the output voltage Vo can be output, so that it is possible to improve the accuracy of independent operation detection of distributed power supplies such as solar cells upon grid interconnection.

### (First Variation)

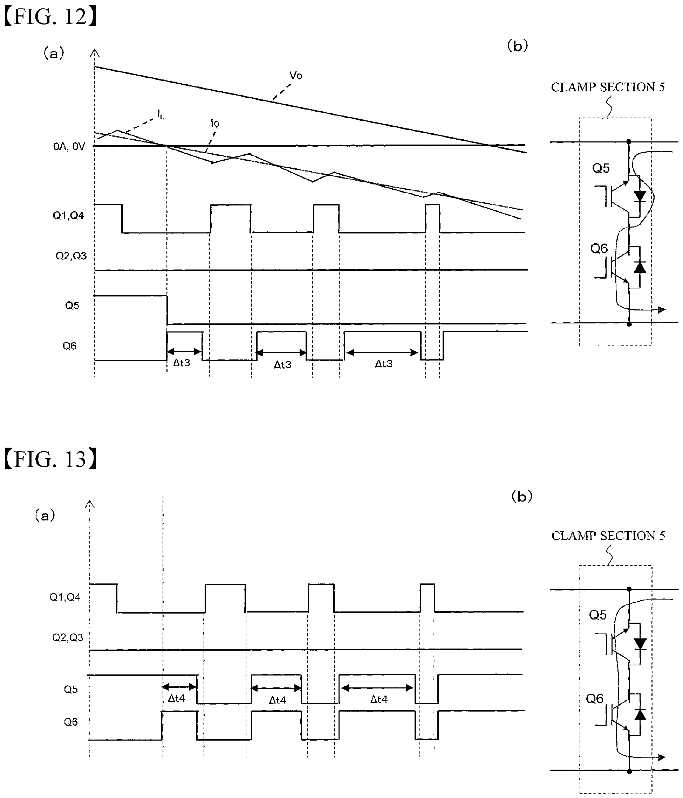

A first variation of embodiment 1 herein will be described with reference to FIG. 12 and FIG. 13. With this variation 1, the control section 6 carries out synchronous rectification to turn on both the switching elements Q5 and Q6 of the clamp section 5 in the period in which circulating current from the reactor L1 flows.

FIG. 12(a) is a time chart to show the waveforms of drive signals in the inverter device 1 according to embodiment 1, and FIG. 12(b) shows the flow of circulating current in the clamp section 5 in period Δt3. In this case, current flows in the diode section D5 of the switching element Q5 constituting the clamp section 5, so that loss (W) that is proportional to the magnitude of the forward voltage×the forward current in the diode D5 is produced.

FIG. 13(a) is a time chart to show the waveforms of drive signals in the inverter device 1 according to variation 1 herein. FIG. 13(b) shows the flow of circulating current in the clamp section 5 in period Δt4. The control section 6 turns on both the switching elements Q5 and Q6 of the clamp section 5 in period Δt4, in which circulating current from the reactor L1 flows in the clamp section 5. Consequently, a current path is formed where circulating current does not flow in the diode D5 of the switching element Q5. As a result, with variation 1 herein, it is possible to reduce the conduction loss of the diodes, and further improve the efficiency of the inverter device 1.

### (Second Variation)

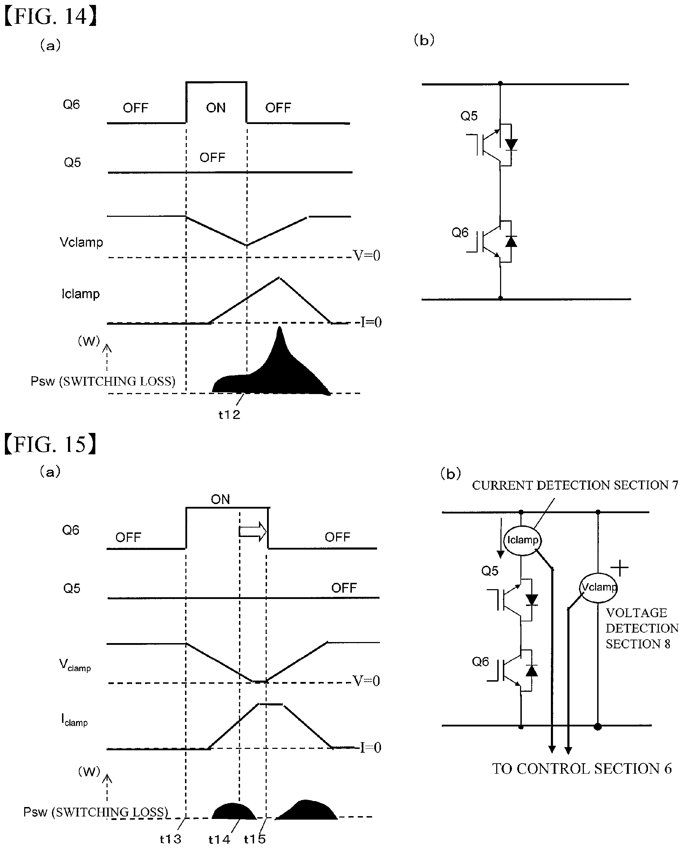

A second variation of embodiment 1 herein will be described with reference to FIG. 14 and FIG. 15. With this variation 2, the switching elements Q5 and Q6 of the clamp section 5 are switched on/off when the voltage or the current in the clamp section 5 is zero.

FIG. 14(a) shows a time chart of signal waveforms and switching loss Psw(W) in the above inverter device 1 according to embodiment 1 for description, and FIG. 14(b) shows a circuit structure of the clamp section 5. As shown in FIG. 14(a), when driving the switching element Q6 by means of control pulses with a very short ON period, after the switching element Q6 is turned on, an off signal arrives at time t12, which is before the voltage V_{clamp} of the clamp section 5 drops to 0. Consequently, switching loss Psw that is proportional to the magnitude of voltage×current is produced. Although, generally, the switching loss P_{SW} that is produced in one switching is little, as the frequency of switching increases, the number of times to carry out switching increases as well, resulting in greater values.

So, with variation 2 herein, as shown in FIG. 15(b), current I_{clamp} that flows in the clamp section 5 is detected in the current detection section 7, voltage V_{clamp} across the clamp section 5 is measured in the voltage detection section 8, and these are sent to the control section 6. The control section 6 makes it a requirement for the switching operation of the clamp section 5 that the voltage V_{clamp} or the current I_{clamp} is near 0. That is, the control section 6 applies control so that the time when the switching element Q6 is turned off is shifted until V_{clamp} becomes zero, and the switching loss P_{SW} becomes minimal as ZVS (Zero Voltage Switching). To be more specific, at time t13 shown in FIG. 15(a), the control section allows the switching element Q6 to be turned on because the current is 0. At time t14, the control section does not allow the switching element Q6 to be turned on because the voltage is not 0, and, at time t15, when the voltage becomes 0, the control section allows the switching element Q6 to be turned off. By this means, with variation 2 herein, it is possible to reduce the switching loss Psw of the clamp section 5, and improve the efficiency of the inverter device 1.

### (Third Variation)

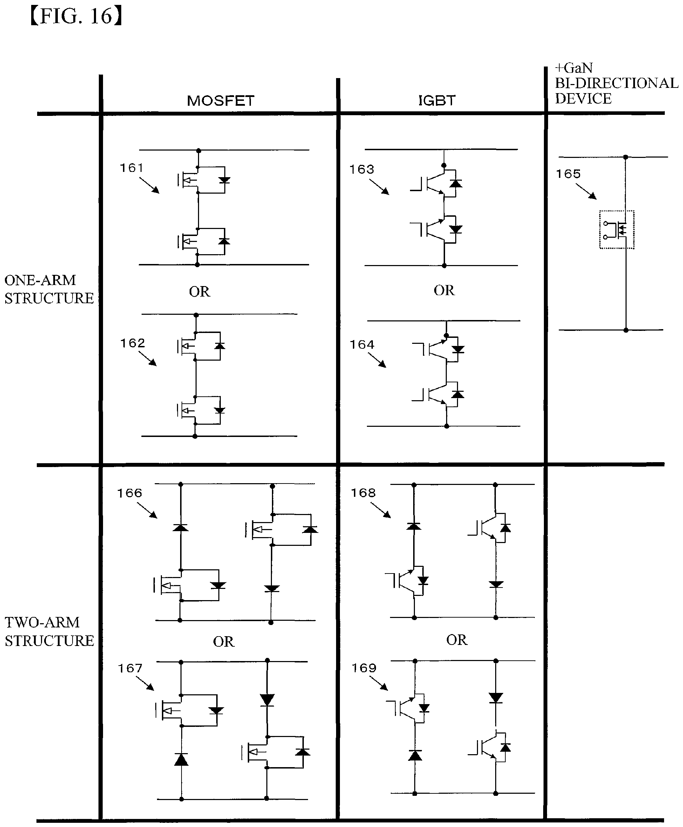

A third variation of embodiment 1 herein will be described with reference to FIG. 16. This variation 3 encompasses the module structure of the clamp section 5. When the clamp section 5 assumes a one-arm structure, it is possible to use a circuit 161, in which two MOSFETs (metal-oxide-semiconductor field-effect transistors) where diodes are connected in anti-parallel are connected in series so that the conducting directions of these diodes become opposite directions. Also, it is equally possible to use a circuit 164, in which two IGBTs where diodes are connected in anti-parallel are connected in series so that the conducting directions of these diodes become opposite directions. In these cases, the number of devices or drive circuits can be made smaller and synchronous rectification becomes possible, so that it is possible to improve the efficiency of the inverter device 1, and, since there is only one current path in the clamp section 5, there is an advantage that one current detection circuit suffices. Figure 16 also shows further examples of clamp sections (162, 163, 165, 166 - 169) which do not fall into the scope of the claims. In one of these examples not falling under the scope of the claims, the clamp section 5 can be formed with one GaN bi-directional device circuit 165, so it is possible to make the number of switching elements smaller, and minimize the number of devices and drive circuits.

In other examples not falling into the scope of the claims, the clamp section 5 may be formed with two arms as well. Two separate electrical connecting paths (arms) are provided between the connecting wires S11 and S12, where each path is formed by connecting a MOSFET where a first diode is connected in anti-parallel and a second diode in series, and the conducting directions of the first diode and the second diode become opposite directions. Also, it is equally possible to use a circuit 166 or 167, in which the conducting directions of the diodes on the two connecting paths become opposite directions. Furthermore, it is also possible to use a circuit 168 or 169 by replacing the MOSFETs of the circuits 166 and 167 with IBGTs. When these two arms are used, it is possible to select diodes and switching elements individually, so that it is possible to improve the efficiency of the inverter device 1 without the impact of recovery loss.

### (Fourth Variation)

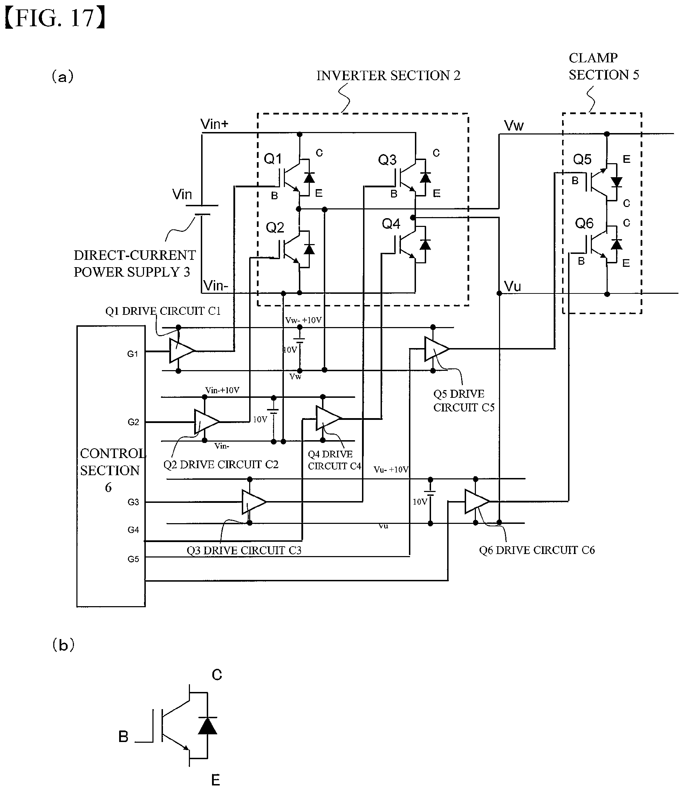

A fourth variation of embodiment 1 herein will be described with reference to FIG. 17. With this variation 4, the fifth switching element Q5 and the sixth switching element Q6 of the clamp section 5 are arranged so that a collector C is common. Also, the connection of the first switching element Q1 and the fifth switching element Q5 and the connection of the sixth switching element Q6 and the third switching element Q3 are arranged in such orientation that an emitter E is common.

The inverter device 1 needs drive circuits C5 and C6 to drive the fifth switching element Q5 and the sixth switching element Q6 of the clamp section 5. Normally, when an IGBT is used as a switching element, negative voltage of the driver circuit requires the emitter potential of the IGBT, and positive voltage of the driver circuit requires approximately the emitter potential+10V.

With variation 4 herein, the emitter potential of the fifth switching element Q5 becomes common with the emitter potential of the first switching element Q1 (in the drawing, Vw), so that it is possible to use the power supply of the drive circuit C1 of the first switching element Q1, in the drive circuit C5 of the fifth switching element Q5, on an as-is basis. Also, the emitter potential of the sixth switching element Q6 becomes the same as the emitter potential of the third switching element Q3, so that the IGBTs with the same emitter potential can share the power supply voltage of the drive circuit and share the power supply of the drive circuit C3 and the drive circuit C6. As a result, with embodiment 4 herein, it is not necessary to provide dedicated power supply paths for the drive circuits C5 and C6 of the fifth switching element Q5 and the sixth switching element Q6, so that it is possible to simplify, miniaturize and reduce the cost of the drive circuit.

### (Fifth Variation)

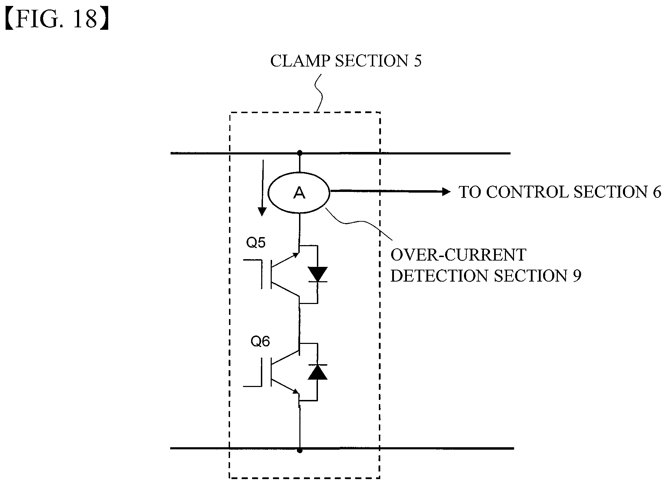

A fifth variation of embodiment 1 herein will be described with reference to FIG. 18. With this variation 5, the inverter device 1 has an over-current detection section 9, which detects abnormal current that flows in the clamp section 5. When current that is detected in the over-current detection section 9 exceeds an allowable value, the control section 6 controls pulse signal so that current is forcibly turned off in the fifth switching element Q5 and the sixth switching element Q6 of the clamp section 5. As a result of this, in variation 5 herein, it is possible to effectively protect the input/output circuit, the wiring and the switching elements Q5 and Q6, so that it is possible to improve the safety of the inverter device 1. Note that, when making the clamp section 5 a two-arm structure, two over-current detection sections 9 are required, so that variation 5 herein is more effective when making the clamp section 5 a one-arm structure.

### (Embodiment 2)

A grid interconnection inverter device according to embodiment 2 of the present invention will be described. Grid interconnection inverter devices are used in, for example, power conditioners that convert the direct-current power that is generated in solar cell modules, to alternating-current power that can be used in households.

Grid interconnection inverter devices have the function for detecting whether or not distributed power supplies such as solar cells are separated from the system power supply and operating independently. The grid interconnection inverter device according to embodiment 2 herein has the inverter device 1 of above embodiment 1. Also, an independent operation detection section is provided, which, using the inverter device 1, supplies reactive power with a phase shift with respect to the voltage of the system power supply, measures the system frequency, and detects whether or not the distributed power supply is operating independently based on changes of this system frequency.

For example, using the inverter device 1, alternating current with a phase lead to alternating-current voltage is output. At this time, if the system power supply is disconnected, the voltage phase moves following changes of the current phase, so that the system frequency changes significantly. The independent operation detection section can detect whether or not the distributed power supply is operating independently, based on such changes of the system frequency, and, carry out active detection of independent operation accurately upon grid interconnection.

For example, the inverter device 1 according to the above embodiment 1 may be applied to a UPS (uninterruptible power supply device).

### Reference Signs List

- 1: Inverter device
- 2: Inverter section
- 3: Direct-current power supply
- 4: Load
- 5: Clamp section
- 6: Control section
- 9: Over-current detection section
- Q1: First switching element
- Q2: Second switching element
- Q3: Third switching element
- Q4: Fourth switching element
- Q5: Fifth switching element
- Q6: Sixth switching element
- D1: First diode
- D2: Second diode
- D3: Third diode
- D4: Fourth diode
- D5: Fifth diode
- D6: Sixth diode
- S11,: S12 Connecting wire

## Claims

1. An inverter device (1), comprising:
an inverter section (2) that is formed by parallel-connecting a series circuit of a first switching element (Q1) where a first diode (D1) is connected in anti-parallel and a second switching element (Q2) where a second diode (D2) is connected in anti-parallel, and a series circuit of a third switching element (Q3) where a third diode (D3) is connected in anti-parallel and a fourth switching element (Q4) where a fourth diode (D4) is connected in anti-parallel, and in which connecting wires (S11, S12) are drawn out from a midpoint of the first switching element (Q1) and the second switching element (Q2) and a midpoint of the third switching element (Q3) and the fourth switching element (Q4), and the connecting wires (S11, S12) are connected to a load (4);
a clamp section (5) provided between the two connecting wires (S11, S12), and formed with a series circuit, in which a fifth switching element (Q5) where a fifth diode (D5) is connected in anti-parallel and a sixth switching element (Q6) where a sixth diode (D6) is connected in anti-parallel are series-connected so that conducting directions of the fifth diode (D5) and the sixth diode (D6) become opposite to each other, and wherein the fifth switching element (Q5) and the sixth switching element (Q6) that form the clamp section (5) are connected in series in such orientation that a collector is common, and connection of the first switching element (Q1) and the fifth switching element (Q5) and connection of the third switching element (Q3) and the sixth switching element (Q6) are arranged in such orientation that an emitter is common; and
a control section (6) that is configured to supply pulse signals for on/off switching to each of the first switching element (Q1) to the sixth switching element (Q6) such that when there is a phase shift between an output current (I_{O}) and an output voltage (V_{O}) to be output to the load,
(i) in a time period of an output AC cycle of the inverter device where the output current (I_{O}) is negative and the output voltage (V_{O}) is positive, the control section (6) is configured to switch on and off the first switching element (Q1) and the fourth switching element (Q4) based on PWM signals, switch off the second switching element (Q2) and the third switching element (Q3), and switch off the fifth switching element (Q5) in the ON period of the first switching element (Q1) and the fourth switching element (Q4), and switch off the sixth switching element (Q6) in the ON period of the first switching element (Q1) and the fourth switching element (Q4), and switch on the sixth switching element (Q6) in the OFF period of the first switching element (Q1) and the fourth switching element (Q4), and
(ii) in a time period of an output AC cycle of the inverter device where the output current (I_{O}) is positive and the output voltage (V_{O}) is negative, the control section (6) is configured to switch on and off the second switching element (Q2) and the third switching element (Q3) based on PWM signals and switch off the first switching element (Q1) and the fourth switching element (Q4), and switch off the fifth switching element (Q5) in the ON period of the second switching element (Q2) and the third switching element (Q3), and switch on the fifth switching element in the OFF period of the second switching element (Q2) and the third switching element (Q3), switch off the sixth switching element (Q6) in the ON period of the second switching element (Q2) and the third switching element (Q3),
**characterized in that**
(iii) in a time period of an output AC cycle of the inverter device where the output current (I_{O}) is positive and the output voltage (V_{O}) is positive, the control section (6) is configured to switch on and off the first switching element (Q1) and the fourth switching element (Q4) based on PWM signals, switch off the second switching element (Q2) and the third switching element (Q3), and constantly switch on the fifth switching element (Q5) and constantly switch off the sixth switching element (Q6), and
(iv) in a time period of an output AC cycle of the inverter device where the output current (I_{O}) is negative and the output voltage (V_{O}) is negative, the control section (6) is configured to switch on and off the second switching element (Q2) and the third switching element (Q3) based on PWM signals and switch off the first switching element (Q1) and the fourth switching element (Q4), and constantly switch off the fifth switching element (Q5) and constantly switch on the sixth switching element (Q6).

2. The inverter device according to claim 1, wherein the control section (6) is configured to supply the pulse signals to provide a dead time (Δt2) in an on-period of the fifth switching element (Q5) and the sixth switching element (Q6) so that the sixth switching element (Q6) is not turned on during an on-period of the first switching element (Q1) and the fourth switching element (Q4) and the fifth switching element (Q5) is not turned on during an in-period of the second switching element (Q2) and the third switching element (Q3).

3. The inverter device according to any one of claim 1 to claim 2, further comprising a current detection section (7) for detecting current (I_{clamp}) flowing in the clamp section (5) and a voltage detection section (8) for measuring voltage (V_{clamp}) across the clamp section (5), and wherein the control section (6) is configured to switch on the fifth switching element (Q5) or the sixth switching element (Q6) of the clamp section (5) when the current (I_{clamp}) flowing in the clamp section (5) is zero, and switch off the fifth switching element (Q5) or the sixth switching element (Q6) of the clamp section (5) when the voltage (V_{clamp}) across the clamp section (5) is zero.

4. The inverter device according to any one of claim 1 to claim 3, wherein MOSFETs or IGBTs are used as the fifth switching element (Q5) and the sixth switching element (Q6) that form the clamp section (5).

5. The inverter device according to any one of claim 1 to claim 4, wherein:
the inverter device (1) further comprises an over-current detection section (9) that is configured to detect over-current that flows in the clamp section (5); and
the control section (6) is configured to supply the pulse signals so that, when current detected in the over-current detection section (9) exceeds an allowable value, the fifth switching element (Q5) and the sixth switching element (Q6) of the clamp section (5) are both turned off forcibly.

6. A grid interconnection inverter device (1), which comprises an independent operation detection function for detecting whether or not a distributed power supply is separated from a system power supply and operating independently, comprising:
the inverter device (1) according to any one of claim 1 to claim 5; and
an independent operation detection section that, using the inverter device, is configured to supply reactive power with a phase shift with respect to voltage of the system power supply, measure a system frequency, and detect whether the distributed power supply is operating independently based on changes of the system frequency.

## Patentansprüche

1. Umrichtervorrichtung (1), aufweisend:
einen Umrichterabschnitt (2), der durch ein Parallelschalten einer Reihenschaltung aus einem ersten Schaltelement (Q1), bei dem eine erste Diode (D1) antiparallel geschaltet ist, und einem zweiten Schaltelement (Q2), bei dem eine zweite Diode (D2) antiparallel geschaltet ist, und einer Reihenschaltung aus einem dritten Schaltelement (Q3), bei dem eine dritte Diode (D3) antiparallel geschaltet ist, und einem vierten Schaltelement (Q4), bei dem eine vierte Diode (D4) antiparallel geschaltet ist, gebildet ist und bei dem Verbindungsdrähte (S11, S12) von einem Mittelpunkt des ersten Schaltelements (Q1) und des zweiten Schaltelements (Q2) und einem Mittelpunkt des dritten Schaltelements (Q3) und des vierten Schaltelements (Q4) herausgezogen sind und die Verbindungsdrähte (S11, S12) mit einer Last (4) verbunden sind;
einen Klemmabschnitt (5), der zwischen den zwei Verbindungsdrähten (S11, S12) vorgesehen ist und mit einer Reihenschaltung gebildet ist, in der ein fünftes Schaltelement (Q5), bei dem eine fünfte Diode (D5) antiparallel geschaltet ist, und ein sechstes Schaltelement (Q6), bei dem eine sechste Diode (D6) antiparallel geschaltet ist, in Reihe geschaltet sind, so dass die Leitungsrichtungen der fünften Diode (D5) und der sechsten Diode (D6) einander entgegengesetzt sind, und wobei das fünfte Schaltelement (Q5) und das sechste Schaltelement (Q6), die den Klemmabschnitt (5) bilden, so in einer Richtung in Reihe geschaltet sind, dass ein Kollektor gemeinsam ist, und eine Verbindung des ersten Schaltelements (Q1) und des fünften Schaltelements (Q5) und eine Verbindung des dritten Schaltelements (Q3) und des sechsten Schaltelements (Q6) so in einer Richtung angeordnet sind, dass ein Emitter gemeinsam ist; und
einen Steuerabschnitt (6), der konfiguriert ist, um an jedes von dem ersten Schaltelement (Q1) bis zu dem sechsten Schaltelement (Q6) Impulssignale zum Ein/Aus-Schalten zu liefern, so dass, wenn zwischen einem Ausgangsstrom (I_{ο}) und einer Ausgangsspannung (Vₒ), die an die Last ausgegeben werden soll, eine Phasenverschiebung vorliegt,
(i) in einer Zeitperiode eines Ausgangswechselstromzyklus der Umrichtervorrichtung, in der der Ausgangsstrom (I_{ο}) negativ und die Ausgangsspannung (V_{O}) positiv ist, der Steuerabschnitt (6) konfiguriert ist, um das erste Schaltelement (Q1) und das vierte Schaltelement (Q4) auf der Grundlage von PWM-Signalen ein- und auszuschalten, das zweite Schaltelement (Q2) und das dritte Schaltelement (Q3) auszuschalten und das fünfte Schaltelement (Q5) in der EIN-Periode des ersten Schaltelements (Q1) und des vierten Schaltelements (Q4) auszuschalten, und das sechste Schaltelement (Q6) in der EIN-Periode des ersten Schaltelements (Q1) und des vierten Schaltelements (Q4) auszuschalten, und das sechste Schaltelement (Q6) in der AUS-Periode des ersten Schaltelements (Q1) und des vierten Schaltelements (Q4) einzuschalten, und
(ii) in einer Zeitperiode eines Ausgangswechselstromzyklus der Umrichtervorrichtung, in der der Ausgangsstrom (I_{ο}) positiv und die Ausgangsspannung (V_{O}) negativ ist, der Steuerabschnitt (6) konfiguriert ist, um das zweite Schaltelement (Q2) und das dritte Schaltelement (Q3) auf der Grundlage von PWM-Signalen ein- und auszuschalten und das erste Schaltelement (Q1) und das vierte Schaltelement (Q4) auszuschalten, und das fünfte Schaltelement (Q5) in der EIN-Periode des zweiten Schaltelements (Q2) und des dritten Schaltelements (Q3) auszuschalten, und das fünfte Schaltelement in der AUS-Periode des zweiten Schaltelements (Q2) und des dritten Schaltelements (Q3) einzuschalten, das sechste Schaltelement (Q6) in der EIN-Periode des zweiten Schaltelements (Q2) und des dritten Schaltelements (Q3) auszuschalten,
**dadurch gekennzeichnet, dass**
(iii) in einer Zeitperiode eines Ausgangswechselstromzyklus der Umrichtervorrichtung, in der der Ausgangsstrom (I_{ο}) positiv und die Ausgangsspannung (V_{O}) positiv ist, der Steuerabschnitt (6) konfiguriert ist, um das erste Schaltelement (Q1) und das vierte Schaltelement (Q4) auf der Grundlage von PWM-Signalen ein- und auszuschalten, das zweite Schaltelement (Q2) und das dritte Schaltelement (Q3) auszuschalten, und das fünfte Schaltelement (Q5) konstant einzuschalten und das sechste Schaltelement (Q6) konstant auszuschalten, und
(iv) in einer Zeitperiode eines Ausgangswechselstromzyklus der Umrichtervorrichtung, in der der Ausgangsstrom (I_{ο}) negativ und die Ausgangsspannung (V_{O}) negativ ist, der Steuerabschnitt (6) konfiguriert ist, um das zweite Schaltelement (Q2) und das dritte Schaltelement (Q3) auf der Grundlage von PWM-Signalen ein- und auszuschalten, und das erste Schaltelement (Q1) und das vierte Schaltelement (Q4) auszuschalten, und das fünfte Schaltelement (Q5) konstant auszuschalten und das sechste Schaltelement (Q6) konstant einzuschalten.

2. Umrichtervorrichtung nach Anspruch 1, wobei der Steuerabschnitt (6) konfiguriert ist, um die Impulssignale zu liefern, um eine Totzeit (Δt2) in einer Ein-Periode des fünften Schaltelements (Q5) und des sechsten Schaltelements (Q6) vorzusehen, so dass das sechste Schaltelement (Q6) während einer Ein-Periode des ersten Schaltelements (Q1) und des vierten Schaltelements (Q4) nicht eingeschaltet ist und das fünfte Schaltelement (Q5) während einer Ein-Periode des zweiten Schaltelements (Q2) und des dritten Schaltelements (Q3) nicht eingeschaltet ist.

3. Umrichtervorrichtung nach einem der Ansprüche 1 bis 2, ferner einen Stromerfassungsabschnitt (7) zum Erfassen des Stroms (I_{clamp}), der in dem Klemmabschnitt (5) fließt, und einen Spannungserfassungsabschnitt (8) zum Messen der Spannung (V_{clamp}) über dem Klemmabschnitt (5) aufweisend, und wobei der Steuerabschnitt (6) konfiguriert ist, um das fünfte Schaltelement (Q5) oder das sechste Schaltelement (Q6) des Klemmabschnitts (5) einzuschalten, wenn der Strom (I_{clamp}), der in dem Klemmabschnitt (5) fließt, Null ist, und das fünfte Schaltelement (Q5) oder das sechste Schaltelement (Q6) des Klemmabschnitts (5) auszuschalten, wenn die Spannung (V_{clamp}) über dem Klemmabschnitt (5) Null ist.

4. Umrichtervorrichtung nach einem der Ansprüche 1 bis 3, wobei als fünftes Schaltelement (Q5) und als sechstes Schaltelement (Q6), die den Klemmabschnitt (5) bilden, MOSFETs oder IGBTs verwendet werden.

5. Umrichtervorrichtung nach einem der Ansprüche 1 bis 4, wobei:
die Umrichtervorrichtung (1) ferner einen Überstromerfassungsabschnitt (9) aufweist, der konfiguriert ist, um einen Überstrom zu erfassen, der in dem Klemmabschnitt (5) fließt; und
der Steuerabschnitt (6) konfiguriert ist, um die Impulssignale zu liefern, so dass, wenn der Strom, der in dem Überstromerfassungsabschnitt (9) erfasst ist, einen zulässigen Wert überschreitet, das fünfte Schaltelement (Q5) und das sechste Schaltelement (Q6) des Klemmabschnitts (5) beide zwangsweise ausgeschaltet werden.

6. Netzverbund-Umrichtervorrichtung (1), die eine Funktion zum Erfassen einer unabhängigen Operation aufweist, um zu erfassen, ob eine verteilte Energieversorgung von einer Systemenergieversorgung getrennt ist und unabhängig arbeitet, oder nicht, aufweisend:
die Umrichtervorrichtung (1) nach einem der Ansprüche 1 bis 5; und
einen Abschnitt zum Erfassen der unabhängigen Operation, der unter Verwendung der Umrichtervorrichtung konfiguriert ist, um eine Blindleistung mit einer Phasenverschiebung in Bezug auf eine Spannung der Systemenergieversorgung zu liefern, eine Systemfrequenz zu messen, und auf der Grundlage von Änderungen der Systemfrequenz zu erfassen, ob die verteilte Energieversorgung unabhängig arbeitet.

## Revendications

1. Dispositif onduleur (1), comprenant :
une section d'onduleur (2) qui est formée en connectant en parallèle un circuit en série d'un premier élément de commutation (Q1) où une première diode (D1) est connectée en antiparallèle, et d'un deuxième élément de commutation (Q2) où une deuxième diode (D2) est connectée en antiparallèle, et un circuit en série d'un troisième élément de commutation (Q3) où une troisième diode (D3) est connectée en antiparallèle, et d'un quatrième élément de commutation (Q4) où une quatrième diode (D4) est connectée en antiparallèle, et dans lequel des fils de connexion (S11, S12) sont tirés depuis un point médian du premier élément de commutation (Q1) et du deuxième élément de commutation (Q2) et un point médian du troisième élément de commutation (Q3) et du quatrième élément de commutation (Q4), et les fils de connexion (S11, S12) sont connectés à une charge (4) ;
une section de serrage (5) fournie entre les deux fils de connexion (S11, S12), et formée avec un circuit en série, dans lequel un cinquième élément de commutation (Q5) où une cinquième diode (D5) est connectée en antiparallèle, et un sixième élément de commutation (Q6) où une sixième diode (D6) est connectée en antiparallèle, sont connectés en série, de sorte que des directions de conduction de la cinquième diode (D5) et de la sixième diode (D6) deviennent mutuellement opposées, et dans lequel le cinquième élément de commutation (Q5) et le sixième élément de commutation (Q6) qui forment la section de serrage (5) sont connectés en série dans une orientation telle qu'un collecteur est commun, et une connexion du premier élément de commutation (Q1) et du cinquième élément de commutation (Q5) et une connexion du troisième élément de commutation (Q3) et du sixième élément de commutation (Q6) sont agencées dans une orientation telle qu'un émetteur est commun ; et
une section de commande (6) qui est configurée de manière à fournir des signaux à impulsions, pour une commutation de mise sous tension/hors tension, à chaque élément du premier élément de commutation (Q1) au sixième élément de commutation (Q6), de sorte que, lorsqu'il existe un déphasage entre un courant de sortie (Iₒ) et une tension de sortie (Vₒ) à fournir en sortie à la charge :
(i) dans une période de temps d'un cycle de courant alternatif de sortie du dispositif onduleur où le courant de sortie (Iₒ) est négatif et la tension de sortie (Vₒ) est positive, la section de commande (6) est configurée de manière à mettre sous tension et hors tension le premier élément de commutation (Q1) et le quatrième élément de commutation (Q4) sur la base de signaux de modulation d'impulsion en durée, PWM, à mettre hors tension le deuxième élément de commutation (Q2) et le troisième élément de commutation (Q3), et à mettre hors tension le cinquième élément de commutation (Q5) dans la période sous tension du premier élément de commutation (Q1) et du quatrième élément de commutation (Q4), et à mettre hors tension le sixième élément de commutation (Q6) dans la période sous tension du premier élément de commutation (Q1) et du quatrième élément de commutation (Q4), et à mettre sous tension le sixième élément de commutation (Q6) dans la période hors tension du premier élément de commutation (Q1) et du quatrième élément de commutation (Q4) ; et
(ii) dans une période de temps d'un cycle de courant alternatif de sortie du dispositif onduleur où le courant de sortie (Iₒ) est positif et la tension de sortie (Vₒ) est négative, la section de commande (6) est configurée de manière à mettre sous tension et hors tension le deuxième élément de commutation (Q2) et le troisième élément de commutation (Q3), sur la base de signaux de modulation PWM, à mettre hors tension le premier élément de commutation (Q1) et le quatrième élément de commutation (Q4), et à mettre hors tension le cinquième élément de commutation (Q5) dans la période sous tension du deuxième élément de commutation (Q2) et du troisième élément de commutation (Q3), et à mettre sous tension le cinquième élément de commutation dans la période hors tension du deuxième élément de commutation (Q2) et du troisième élément de commutation (Q3), et à mettre hors tension le sixième élément de commutation (Q6) dans la période sous tension du deuxième élément de commutation (Q2) et du troisième élément de commutation (Q3) ;
**caractérisé en ce que**
(iii) dans une période de temps d'un cycle de courant alternatif de sortie du dispositif onduleur où le courant de sortie (Iₒ) est positif et la tension de sortie (Vₒ) est positive, la section de commande (6) est configurée de manière à mettre sous tension et hors tension le premier élément de commutation (Q1) et le quatrième élément de commutation (Q4), sur la base de signaux de modulation PWM, à mettre hors tension le deuxième élément de commutation (Q2) et le troisième élément de commutation (Q3), et à mettre sous tension constamment le cinquième élément de commutation (Q5) et à mettre hors tension constamment le sixième élément de commutation (Q6) ; et
(iv) dans une période de temps d'un cycle de courant alternatif de sortie du dispositif onduleur où le courant de sortie (Iₒ) est négatif et la tension de sortie (Vₒ) est négative, la section de commande (6) est configurée de manière à mettre sous tension et hors tension le deuxième élément de commutation (Q2) et le troisième élément de commutation (Q3), sur la base de signaux de modulation PWM, à mettre hors tension le premier élément de commutation (Q1) et le quatrième élément de commutation (Q4), à mettre hors tension constamment le cinquième élément de commutation (Q5) et à mettre sous tension constamment le sixième élément de commutation (Q6).

2. Dispositif onduleur selon la revendication 1, dans lequel la section de commande (6) est configurée de manière à fournir les signaux à impulsions afin de fournir un temps mort (Δt2) dans une période sous tension du cinquième élément de commutation (Q5) et du sixième élément de commutation (Q6), de sorte que le sixième élément de commutation (Q6) n'est pas mis sous tension pendant une période sous tension du premier élément de commutation (Q1) et du quatrième élément de commutation (Q4), et que le cinquième élément de commutation (Q5) n'est pas mis sous tension pendant une période sous tension du deuxième élément de commutation (Q2) et du troisième élément de commutation (Q3).

3. Dispositif onduleur selon l'une quelconque des revendications 1 à 2, comprenant en outre une section de détection de courant (7) destinée à détecter un courant (I_{clamp}) circulant dans la section de serrage (5), et une section de détection de tension (8) destinée à mesurer une tension (V_{clamp}) à travers la section de serrage (5), et dans lequel la section de commande (6) est configurée de manière à mettre sous tension le cinquième élément de commutation (Q5) ou le sixième élément de commutation (Q6) de la section de serrage (5) lorsque le courant (I_{clamp}) circulant dans la section de serrage (5) est nul, et à mettre hors tension le cinquième élément de commutation (Q5) ou le sixième élément de commutation (Q6) de la section de serrage (5) lorsque la tension (V_{clamp}) à travers la section de serrage (5) est nulle.

4. Dispositif onduleur selon l'une quelconque des revendications 1 à 3, dans lequel des transistors à effet de champ à semi-conducteur à oxyde métallique, MOSFET, ou des transistors bipolaires à porte isolée, IGBT, sont utilisés en tant que le cinquième élément de commutation (Q5) et le sixième élément de commutation (Q6) qui forment la section de serrage (5).

5. Dispositif onduleur selon l'une quelconque des revendications 1 à 4, dans lequel :
le dispositif onduleur (1) comprend en outre une section de détection de surintensité (9) qui est configurée de manière à détecter une surintensité qui circule dans la section de serrage (5) ; et
la section de commande (6) est configurée de manière à fournir les signaux à impulsions de sorte que, lorsqu'un courant détecté dans la section de détection de surintensité (9) dépasse une valeur admissible, le cinquième élément de commutation (Q5) et le sixième élément de commutation (Q6) de la section de serrage (5) sont tous deux mis hors tension de force.

6. Dispositif onduleur d'interconnexion de réseau (1), lequel comprend une fonction de détection de fonctionnement indépendant destinée à détecter si une alimentation électrique distribuée est ou non séparée d'une alimentation électrique de système et fonctionne indépendamment, comprenant :
le dispositif onduleur (1) selon l'une quelconque des revendications 1 à 5 ; et
une section de détection de fonctionnement indépendant qui, en utilisant le dispositif onduleur, est configurée de manière à fournir une puissance réactive avec un déphasage par rapport à la tension de l'alimentation électrique de système, à mesurer une fréquence système, et à détecter si l'alimentation électrique distribuée fonctionne indépendamment sur la base de modifications de la fréquence système.
